# FASCICULE DE BREVET EUROPEEN

(11) **EP 2 282 937 B1**
(45) Date de publication et mention de la délivrance du brevet: **08.08.2012**
(21) Numéro de dépôt: 09772642.6
(22) Date de dépôt: 03.06.2009
(51) Int. Cl.: B64D 47/02

(54) **RAMPE D'ECLAIRAGE POUR AERONEF**
FLUGZEUGBELEUCHTUNGSSTREIFEN
AIRCRAFT LIGHTING STRIP

(30) Priorité: 05.06.2008 FR 0803114
(43) Date de publication de la demande: 16.02.2011
(73) Titulaire: Airbus Operations, 31060 Toulouse (FR)
(72) Inventeur: BURGUNDER Samuel, F-31200 Toulouse (FR)
(74) Mandataire: Hartmann, Jean-Luc
(86) Numéro de dépôt international: PCT/FR2009/000644
(87) Numéro de publication internationale: WO 2010/000959

(56) Documents cités:
- DE-A1- 10 208 111
- US-A- 3 978 330
- US-B1- 6 398 394

## Description

La présente invention concerne une rampe d'éclairage pour aéronef.

Un aéronef comprend usuellement des rampes d'éclairage pour l'éclairage de sa cabine, notamment au niveau du plancher et du plafond de la cabine, en bordure du ou des couloirs de circulation de ladite cabine. Ces rampes d'éclairage fournissent une lumière d'ambiance et permettent par ailleurs, en cas de crash, de baliser les couloirs afin de faciliter l'évacuation des passagers.

Le document DE-10208111 décrit un dispositif d'éclairage pour aéronef comportant une pluralité de sources lumineuses électriques, telles des LEDs, qui se présente, dans une variante de réalisation, sous forme de rampe d'éclairage.

L'invention vise à fournir une rampe d'éclairage offrant d'autres fonctionnalités.

En particulier, l'invention vise à fournir une rampe d'éclairage pouvant aider au repérage de l'aéronef en cas de crash en mer.

L'invention vise à atteindre ces objectifs en proposant une rampe d'éclairage simple de conception et peu onéreuse.

Pour ce faire, l'invention concerne une rampe d'éclairage pour aéronef comprenant :
- une pluralité de sources lumineuses électriques,
- un circuit électronique de commande comportant des moyens accumulateurs aptes à alimenter électriquement lesdites sources lumineuses.

La rampe d'éclairage selon l'invention est caractérisée en ce qu'elle comprend une enveloppe étanche à l'eau qui :
- enferme les sources lumineuses et le circuit de commande,
- est adaptée pour rendre la rampe d'éclairage apte à flotter à la surface de l'eau avec les sources lumineuses orientées vers le haut,
- comporte des moyens de fixation réversible pour une fixation réversible de la rampe d'éclairage dans un rail de réception d'un aéronef, lesquels moyens de fixation réversible sont aptes à libérer la rampe d'éclairage dudit rail.

L'invention s'étend à un aéronef comprenant une cabine équipée d'au moins une -et de préférence de plusieurs- rampe d'éclairage selon l'invention. Ces rampes d'éclairage peuvent être agencées sur des rails fixés au plancher ou au plafond de la cabine, de préférence en bordure du ou des couloirs de circulation de ladite cabine.

Dans toute la suite, sauf mention contraire, la rampe d'éclairage selon l'invention est décrite dans la position qu'elle prend lorsqu'elle flotte à la surface de l'eau. Les termes « supérieur », « inférieur », « latéral » etc., employés pour qualifier des parties ou éléments de la rampe d'éclairage sont liés à cette position, qui peut ne pas correspondre à la position de la rampe d'éclairage lorsqu'elle est installée dans un aéronef.

De façon optionnelle et avantageuse, une rampe d'éclairage selon l'invention comprend l'une ou plusieurs des caractéristiques suivantes.

Les moyens de fixation réversible comprennent par exemple des languettes escamotables par déformation élastique, destinées chacune à venir s'encastrer dans un logement du rail de réception de la rampe d'éclairage, et aptes à être escamotées sous l'effet de la pression de l'eau en cas d'immersion. Lorsqu'un crash en mer se produit, l'eau qui envahit la cabine de l'aéronef finit par s'infiltrer entre chaque rampe d'éclairage et le rail recevant ladite rampe, la jonction entre ces deux éléments n'étant pas a priori étanche. Au fur et à mesure que l'aéronef s'enfonce, la pression de l'eau augmente. L'eau présente entre la rampe d'éclairage et le rail exerce alors une force croissante sur les languettes escamotables, jusqu'à entraîner leur rétractation et libérer la rampe d'éclairage du rail. L'enveloppe de la rampe d'éclairage étant étanche à l'eau, les sources lumineuses électriques et le circuit de commande (dont les moyens accumulateurs) sont protégés de l'eau.

L'enveloppe comprend avantageusement, d'une part au moins un capot supérieur présentant au moins une cavité de réception des sources lumineuses et du circuit de commande, et d'autre part au moins un bouchon inférieur, le(s)dit(s) bouchon(s) obturant de façon étanche à l'eau chaque cavité. Dans toute la suite, par souci de simplicité, la rampe est décrite comme possédant un bouchon et un capot dans lequel est ménagée une cavité fermée par ledit bouchon. Toutefois, l'invention concerne également une rampe possédant plusieurs bouchons et/ou plusieurs capots munis chacun d'une ou de plusieurs cavités ; les sources lumineuses et le circuit de commande sont répartis dans les diverses cavités si la rampe en possède plusieurs, le ou les bouchons étant prévus de façon à obturer toutes les cavités. Les caractéristiques définies ci-après pour un capot, une cavité et un bouchon s'appliquent de préférence à tous les capots, bouchons et cavités que possède la rampe le cas échéant.

Les sources lumineuses sont agencées dans la cavité du capot de façon à être orientées vers une face supérieure du capot, dite face d'émission, qui est opposée au bouchon ; en d'autres termes, les sources lumineuses sont agencées de façon à émettre des rayons lumineux en direction du fond de la cavité, le capot étant en un matériau transparent ou translucide au moins en regard de chaque source lumineuse.

La rampe d'éclairage est de préférence destinée à être insérée dans une ouverture du rail de telle sorte que son bouchon s'étende au moins partiellement à l'intérieur de ladite ouverture et que la face d'émission de son capot soit visible depuis l'extérieur de cette ouverture.

Les languettes escamotables susmentionnées sont de préférence formées dans le bouchon.

Le bouchon est avantageusement en un matériau peu dense.

Le bouchon est avantageusement en matériau moulable ; un tel bouchon est de préférence formé par surmoulage des sources lumineuses, du circuit de commande et du capot. Le surmoulage permet de garantir l'étanchéité de l'enveloppe.

Le bouchon est par exemple en un matériau choisi parmi les polystyrènes, notamment les polystyrènes expansés.

Le capot présente avantageusement deux ailettes latérales opposées, qui aident à la stabilisation de la rampe d'éclairage à la surface de l'eau. Comme précédemment défini, la rampe d'éclairage selon l'invention est apte à flotter à la surface de l'eau -notamment suite à crash en mer-, dans une position dans laquelle ses sources lumineuses et la face d'émission de son capot sont orientées vers le haut et dans laquelle le capot s'étend au-dessus du bouchon, en partie supérieure de la rampe d'éclairage. Les ailettes du capot agissent alors comme des flotteurs de part et d'autre d'un plan médian longitudinal de la rampe d'éclairage, aidant au maintien de la rampe d'éclairage en position. De préférence, les ailettes du capot s'étendent latéralement à partir de la face d'émission du capot, c'est-à-dire en partie supérieure du capot.

Dans un même but de stabilisation, les moyens accumulateurs sont avantageusement agencés en partie inférieure de la rampe d'éclairage, abaissant ainsi le barycentre de la rampe d'éclairage. Plus précisément, lesdits moyens accumulateurs sont avantageusement agencés entre les sources lumineuses et le bouchon, encastrés dans une cavité formée dans ce dernier.

Les sources lumineuses sont réalisées par des diodes électroluminescentes, qui peuvent être monochromatiques ou polychromatiques.

Les sources lumineuses sont alignées selon une direction longitudinale de la rampe d'éclairage. Par ailleurs, le circuit de commande est adapté pour détecter au moins une condition représentative d'un crash (au sol ou en mer) et pour commander dans ce cas l'activation et la désactivation desdites sources lumineuses de façon à simuler le déplacement, à la manière d'une chenille, d'un point lumineux ou d'un point sombre ou d'un point de couleur (si les sources lumineuses sont polychromatiques) selon ladite direction longitudinale et dans un sens donné dit sens de défilement. Cette caractéristique permet, en cas de crash au sol ou en mer, d'indiquer aux passagers la sortie de secours qu'ils doivent emprunter, par exemple la sortie de secours la plus proche.

Dans une première version de l'invention, le circuit de commande est apte à activer et désactiver les sources lumineuses selon un unique sens de défilement, qui est donc intrinsèque à la rampe d'éclairage. Dans cette version, les rampes d'éclairage sont destinées à être installées dans l'aéronef de façon à ce que leur sens de défilement intrinsèque coïncide avec un sens d'évacuation souhaité prédéterminé ; par exemple, chaque rampe d'éclairage est installée de façon à ce que son sens de défilement intrinsèque indique la sortie de secours la plus proche.

En variante, dans une deuxième version de l'invention, le circuit de commande est apte à activer et désactiver les sources lumineuses dans un sens ou dans l'autre, et est par ailleurs adapté pour détecter un signal représentatif du sens de défilement à appliquer. Cette deuxième version permet de choisir le sens d'évacuation souhaité en fonction des conditions du crash, pour éviter notamment de guider les passagers vers une partie endommagée ou dangereuse (par exemple en feu) de l'aéronef.

Avantageusement, le circuit de commande est adapté pour détecter au moins une condition représentative de la libération de la rampe d'éclairage (c'est-à-dire de son détachement du rail) suite à un crash en mer, et pour commander dans ce cas, de façon répétée, l'activation puis la désactivation de l'ensemble des sources lumineuses. Par exemple, le circuit de commande est relié, à chacune des extrémités longitudinales de la rampe d'éclairage, à au moins un bornier de continuité, et il est adapté pour détecter un courant induit entre les borniers des deux extrémités longitudinales de la rampe ; un tel courant induit traduit le fait que la rampe est immergée. Ainsi, lorsque la rampe d'éclairage vient à flotter à la surface de l'eau suite à un crash en mer, elle émet un signal lumineux clignotant, par exemple avec une fréquence de 15 secondes, facilitant son repérage par des équipes de secours. L'activation simultanée de toutes les sources lumineuses permet de disposer d'une puissance lumineuse relativement importante.

En variante, le circuit de commande peut être adapté pour commander toute autre séquence d'activation et de désactivation des sources lumineuses (chenillard par exemple) après libération de la rampe.

L'invention s'étend à un procédé de réalisation d'une rampe d'éclairage selon l'invention.

En particulier, l'invention concerne un procédé de réalisation d'une rampe d'éclairage comprenant une pluralité de sources lumineuses électriques et un circuit électronique de commande comportant des moyens accumulateurs aptes à alimenter électriquement lesdites sources lumineuses, caractérisé en ce qu'on réalise une enveloppe étanche qui enferme les sources lumineuses et le circuit de commande, est adaptée pour rendre la rampe d'éclairage apte à flotter à la surface de l'eau avec les sources lumineuses orientées vers le haut, et comporte des moyens de fixation réversible pour une fixation réversible de la rampe d'éclairage dans un rail de réception de l'aéronef, lesquels moyens de fixation réversible sont aptes à libérer la rampe d'éclairage dudit rail en cas de crash en mer. De préférence, la réalisation de cette enveloppe comprend les étapes suivantes :
- on fabrique au moins un capot présentant au moins une cavité de réception des sources lumineuses et du circuit de commande, par exemple par moulage ou éventuellement par extrusion,
- on agence les sources lumineuses et le circuit de commande dans ladite(lesdites) cavité(s) dudit capot,
- on forme par surmoulage au moins un bouchon obturant de façon étanche à l'eau chaque cavité.

D'autres détails et avantages de la présente invention apparaîtront à la lecture de la description suivante, qui se réfère aux dessins annexés et porte sur des modes de réalisation préférentiels, fournis à titre d'exemples non limitatifs. Sur ces dessins :
- la figure 1 est une vue schématique éclatée en perspective d'une rampe d'éclairage selon l'invention, les principaux éléments constitutifs de ladite rampe étant séparés à des fins de clarté ;
- la figure 2 est une vue schématique de profil du capot supérieur de la rampe d'éclairage de la figure 1 ;
- la figure 3 est une vue schématique de dessous en perspective d'une extrémité longitudinale de la rampe d'éclairage des figures 1 et 2;
- la figure 4 est une vue schématique en coupe et en perspective de la rampe d'éclairage des figures 1 à 3 agencée dans un rail d'un aéronef.

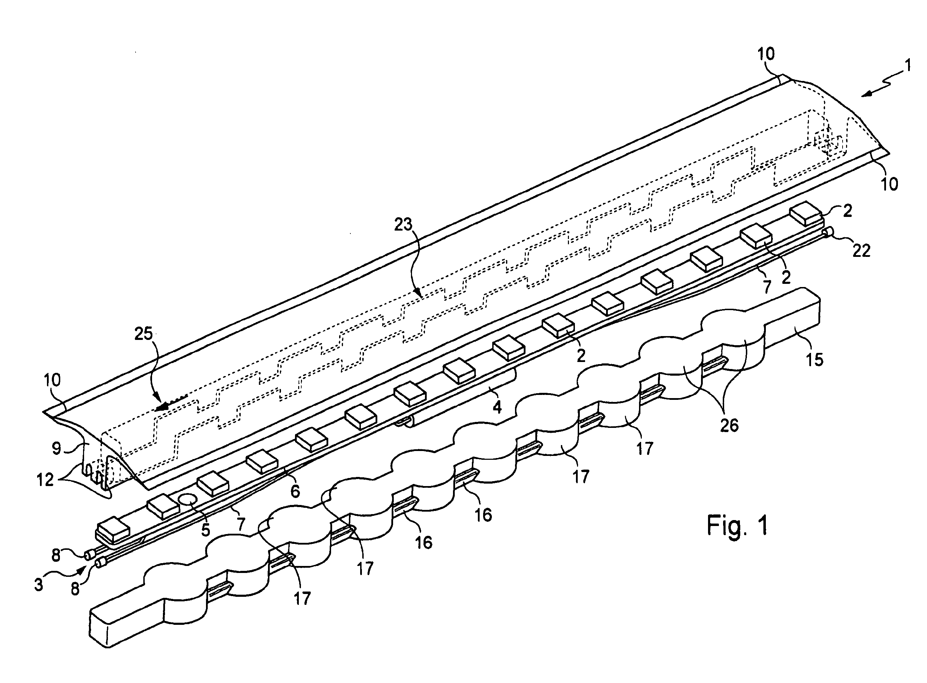

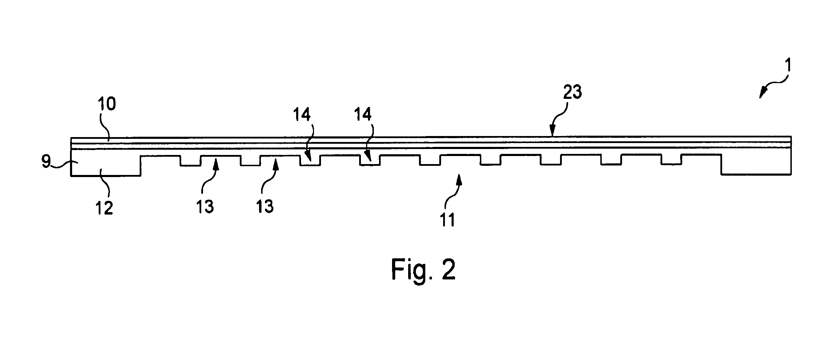

Les figures 1 à 4 illustrent un mode de réalisation d'une rampe d'éclairage selon l'invention, qui présente une forme générale de barre allongée droite, c'est-à-dire rectiligne. Cette rampe d'éclairage est décrite ci-dessous dans la position qu'elle prend lorsqu'elle flotte à la surface de l'eau. Dans cette position, la direction longitudinale de la rampe (direction de sa longueur, c'est-à-dire de sa plus grande dimension) est sensiblement horizontale.

Ladite rampe d'éclairage comprend une pluralité de sources lumineuses électriques réalisées par des diodes électroluminescentes 2 monochromatiques, orientées vers le haut c'est-à-dire aptes à émettre des rayons lumineux selon une direction sensiblement verticale et vers le haut.

La rampe d'éclairage comprend par ailleurs un circuit de commande 3 comportant :
- une plaque support 6 horizontale de faible épaisseur et de forme rectangulaire allongée, dont la direction longitudinale coïncide avec la direction longitudinale de la rampe d'éclairage et dont la longueur est légèrement inférieure à la longueur totale de la rampe d'éclairage ; cette plaque support 6 présente au moins une portion semi-conductrice ; les diodes électroluminescentes 2 sont portées par ladite plaque support 6 ; elles sont alignées et régulièrement réparties selon la direction longitudinale sur une face supérieure de ladite plaque support 6 ;
- un circuit intégré 5 formé sur la face supérieure de la plaque support 6 ; en l'exemple illustré, ce circuit intégré 5 est formé à proximité de l'une des extrémités longitudinales de la plaque support 6 ;
- des moyens accumulateurs 4 agencés en dessous de la plaque support 6, en partie centrale de ladite plaque support (ou de la rampe) et donc sensiblement à égale distance des deux extrémités longitudinales de la rampe d'éclairage;
- des câbles électriques 7, décrits ci-après, qui s'étendent en dessous de la plaque support 6.

La rampe d'éclairage comprend également deux borniers de continuité 8, dits borniers d'entrée, à l'une de ses extrémités longitudinales, et deux autres borniers de continuité 22, dits borniers de sortie, à son autre extrémité longitudinale. Les borniers 8 et 22 s'étendent en partie inférieure de la rampe d'éclairage, en dessous du plan contenant la face inférieure de la plaque support 6 et en saillie, longitudinalement, des extrémités longitudinales de cette dernière.

Les câbles électriques 7 comprennent : un câble reliant l'un -premier- des borniers d'entrée 8 à l'un -premier- des borniers de sortie 22 ; un câble reliant le deuxième bornier d'entrée 8 au deuxième bornier de sortie 22 ; un câble reliant le premier bornier d'entrée 8 à une première ligne conductrice (non représentée) formée sur la plaque support 6, laquelle première ligne conductrice relie le circuit intégré 5 et l'ensemble des diodes électroluminescentes 2 ; un câble reliant le deuxième bornier d'entrée 8 à une deuxième ligne conductrice (non représentée) formée sur la plaque support 6, laquelle deuxième ligne conductrice relie le circuit intégré 5 et l'ensemble des diodes électroluminescentes 2 ; deux câbles reliant les moyens accumulateurs 4 auxdites première et deuxième lignes conductrices.

La rampe d'éclairage comprend par ailleurs un capot supérieur 1 et un bouchon inférieur 15, qui forment une enveloppe étanche à l'eau enfermant les diodes électroluminescentes 2 et le circuit de commande 3.

Le capot 1 possède une forme générale de barre droite allongée dont la direction longitudinale coïncide avec la direction longitudinale de la rampe d'éclairage et dont la longueur est égale à la longueur totale de ladite rampe. La section droite du capot -dans un plan transversal (plan vertical orthogonal à la direction longitudinale)- présente une forme de T. Le capot comprend en effet une âme 9 centrale et deux ailettes 10 latérales.

L'âme 9 du capot comprend deux parois 12 longitudinales latérales délimitant, sur la grande majorité de la longueur du capot, une cavité 11 de réception des diodes électroluminescentes 2 et du circuit de commande 3. En l'exemple illustré, les diodes électroluminescentes 2 et le circuit de commande 3 sont entièrement insérés dans la cavité 11. Comme précédemment expliqué, les diodes électroluminescentes 2 sont placées de façon à émettre des rayons lumineux vers le haut, c'est-à-dire en direction du fond de la cavité 11. La face supérieure 23 du capot est dite face d'émission. Le fond de la cavité 11 est plat, mais il n'est pas exclu qu'il puisse présenter des évidements ponctuels, par exemple en regard des diodes électroluminescentes 2.

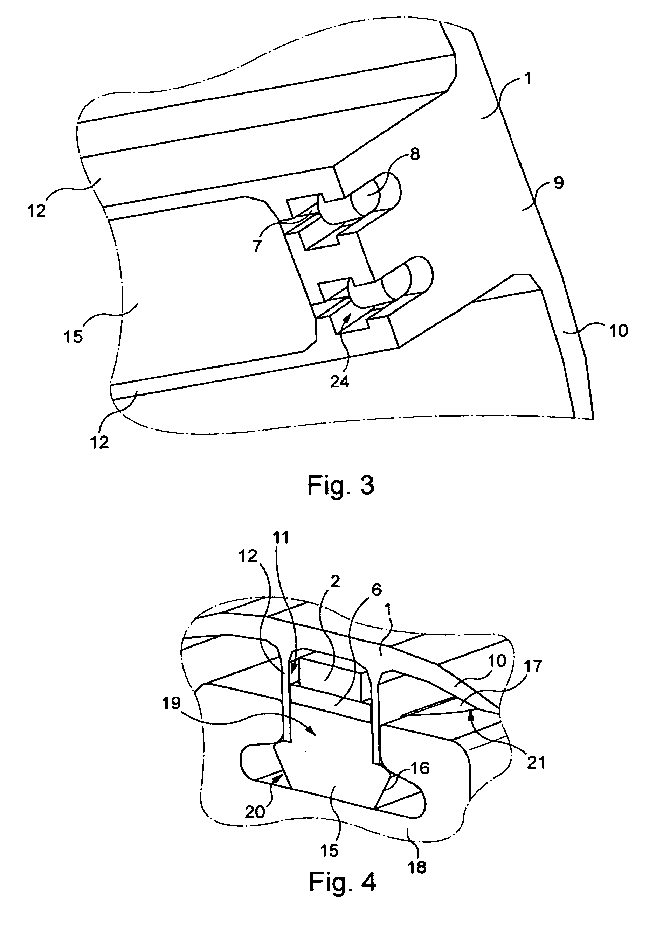

A chacune de ses extrémités longitudinales, l'âme 9 du capot présente une paroi épaisse transversale (voir figure 3) dans laquelle sont ménagées deux rainures 24 de réception des borniers de continuité 8, 22 et des extrémités des câbles électriques 7 reliant lesdits borniers au circuit de commande 3.

Les ailettes 10 du capot s'étendent en partie supérieure du capot de part et d'autre de l'âme 9. Elles présentent une section droite -dans un plan transversal- en forme de chapeau de gendarme aplati.

Le capot 1 est de préférence en un matériau léger, qui de surcroît est transparent ou translucide au moins en regard de chaque diode électroluminescente 2. Ce matériau doit toutefois être résistant. En effet, lorsque la rampe d'éclairage est agencée dans un rail d'aéronef correspondant (voir plus loin), le capot 1 s'étend en dehors dudit rail, dans la cabine de l'aéronef et par exemple à la surface du revêtement recouvrant le plancher de la cabine.

Le bouchon 15 est réalisé par surmoulage des diodes électroluminescentes 2, du circuit de commande 3 et du capot 1 (les diodes 2 et le circuit de commande 3 étant préalablement insérés dans le capot 1). Il vient combler la cavité 11 dudit capot en dessous de la plaque support 6, des câbles 7 et des moyens accumulateurs 4. Il est à noter que la face supérieure du bouchon 15 n'est pas représentée en détails sur la figure 1. Compte tenu de la technique employée pour réaliser le bouchon 15, la face supérieure de ce dernier forme des cavités (non représentées) dans lesquelles sont incrustés les câbles 7 et les moyens accumulateurs 4.

La technique du surmoulage permet de garantir l'étanchéité à l'eau de l'enveloppe ainsi constituée par le capot 1 et le bouchon 15.

Les parois 12 de l'âme 9 du capot présentent une succession de découpes 13 et de dents 14. Le bouchon 15 forme une succession d'excroissances 17 régulièrement réparties selon la direction longitudinale et qui s'étendent en saillie latéralement des parois 12 du capot à travers les découpes 13 de ce dernier. Ces excroissances 17 sont symétriques par rapport à un plan médian longitudinal vertical du bouchon (ou de la rampe) et forment une succession de disques 26 dans le bouchon 15.

Le bouchon 15 présente sur chacun de ses côtés, entre deux excroissances 17 consécutives, une languette 16 escamotable par déformation élastique. Ces languettes escamotables 16 s'étendent en saillie latéralement des parois 12 de l'âme 9 du capot, immédiatement en dessous des dents 14 desdites parois 12. Ces languettes escamotables 16 réalisent des moyens de fixation réversible aptes à permettre, non seulement la fixation de la rampe d'éclairage dans un rail tel que le rail 18 illustré sur la figure 4, mais aussi la libération de ladite rampe hors dudit rail dans certaines conditions.

La rampe d'éclairage selon l'invention est destinée à être agencée dans un rail d'un aéronef, en particulier d'un avion, fixé au plancher ou au plafond de la cabine de l'aéronef, notamment en bordure d'un couloir de circulation de ladite cabine. Un tel rail présente par exemple, à l'instar du rail 18 illustré sur la figure 4, une section droite en forme de C qui délimite, d'une part une ouverture 19 dans laquelle la rampe d'éclairage est introduite, et d'autre part un logement 20 s'étendant en dessous (sur la figure) de ladite ouverture 19. Le logement 20 est apte à recevoir la partie inférieure de la rampe d'éclairage et notamment les languettes escamotables 16 de ladite rampe. La rampe d'éclairage doit être introduite en force dans l'ouverture 19 du rail, ses languettes escamotables 16 s'étendant en saillie latéralement de ladite ouverture 19. Les languettes 16 se rétractent par déformation élastique lors de l'introduction de la rampe d'éclairage dans l'ouverture 19 du rail, puis se déploient dans le logement 20 lorsque la rampe d'éclairage est suffisamment enfoncée, maintenant la rampe en position dans le rail.

La rampe d'éclairage illustrée sur les figures annexées est plus particulièrement adaptée pour être agencée dans un rail de fixation de sièges d'aéronef, tel que le rail 18. L'ouverture 19 d'un tel rail présente de façon connue des encoches 21 formant des points d'ancrage circulaires régulièrement répartis selon la direction longitudinale du rail ; ces points d'ancrage servent au positionnement et à la fixation des sièges de l'aéronef. Les excroissances 17 du bouchon 15 de la rampe d'éclairage sont formées de façon à correspondre aux encoches 21 du rail 18. En d'autres termes, les disques 26 du bouchon 15 viennent s'encastrer dans les points d'ancrage circulaires du rail 18. De façon générale, la rampe présente une section horizontale, dans un plan (horizontal) situé immédiatement au dessus des languettes escamotables 16, qui est sensiblement complémentaire de l'ouverture 19 du rail.

Lorsque la rampe d'éclairage est ainsi agencée dans un rail 18, le bouchon 15 de la rampe d'éclairage est entièrement protégé par le rail. Il est donc possible de réaliser ce bouchon dans un matériau peu résistant, mais qui doit en tout état de cause être étanche à l'eau et présenter une densité la plus faible possible. En effet, l'enveloppe formée par le capot 1 et le bouchon 15 doit, selon l'invention, permettre à la rampe d'éclairage de flotter à la surface de l'eau. Le bouchon 15 est avantageusement en un matériau possédant des propriétés équivalentes à celles du polystyrène expansé.

Par ailleurs, lorsque la rampe d'éclairage est agencée dans un rail fixé au plafond ou au plancher de la cabine de l'aéronef, ses ailettes 10 ont entre autres pour fonction de masquer ledit rail et d'assurer une liaison en pente douce entre l'âme 9 du capot et le revêtement dudit plancher ou plafond. Lorsque la rampe est ainsi agencée, le bord longitudinal libre de chaque ailette 10 repose sur le revêtement du plancher ou plafond, tandis que l'âme 9 du capot est légèrement saillante par rapport au plan de ce revêtement.

La cabine de l'aéronef est de préférence équipée d'une pluralité de rampes d'éclairage selon l'invention, agencées les unes à la suite des autres de telle sorte que leurs directions longitudinales soient alignées et que les extrémités longitudinales adjacentes de deux rampes successives soient jointives et en contact électrique. Le contact électrique entre deux rampes d'éclairage successives est assuré par deux pions ou ressorts conducteurs agencés entre les deux borniers de sortie 22 de l'une des rampes et les deux borniers d'entrée 8 de l'autre rampe. En fonctionnement normal (en vol ou au sol), les diodes électroluminescentes 2 et les circuits de commande 3 des rampes d'éclairage sont ainsi alimentés électriquement par une source électrique centrale de l'aéronef, via les pions ou ressorts conducteurs précités, les borniers de continuité 8 et 22 des rampes et les câbles 7 reliant lesdits borniers aux lignes conductrices desdites rampes. Lorsque ce courant est interrompu (notamment en cas de crash), le circuit de commande 3 et les diodes électroluminescentes 2 de chaque rampe d'éclairage sont alimentés par les moyens accumulateurs 4 de ladite rampe.

Le circuit de commande 3 d'une rampe d'éclairage selon l'invention est adapté pour détecter au moins une condition représentative d'un évènement de type crash en mer ou au sol. Par exemple, il est adapté pour recevoir et identifier un signal représentatif d'un tel crash, émis par une unité de traitement de l'aéronef et déclenché soit de façon manuelle par le personnel navigant, soit de façon automatique en cas d'anomalie survenant sur des données détectées par un instrument de vol par exemple. En variante ou en combinaison, le circuit de commande est adapté pour détecter une interruption de l'alimentation électrique au niveau des borniers de continuité de la rampe d'éclairage, une telle interruption constituant une condition représentative d'un crash.

Le circuit de commande 3 est de plus adapté pour, en cas de détection d'une telle condition (c'est-à-dire en cas de réception du signal susmentionné ou d'interruption de l'alimentation électrique), commander l'activation et la désactivation des diodes électroluminescentes 2 de façon à simuler le déplacement d'un point sombre à la manière d'une chenille selon la direction longitudinale de la rampe d'éclairage et dans un sens de défilement donné, ledit point sombre correspondant à une diode électroluminescente 2 désactivée (tandis que l'ensemble des autres diodes électroluminescentes 2 est activé).

En d'autres termes, le circuit de commande 3 et les diodes électroluminescentes 2 selon l'invention forment un chenillard fonctionnant, en l'exemple illustré, selon un sens de défilement unique, qui est repéré par une flèche 25 imprimée (ou formée par toute autre technique) sur la face d'émission 23 du capot 1 de la rampe d'éclairage.

En cas de crash en mer ou au sol, la rampe selon l'invention permet ainsi d'indiquer aux passagers la sortie vers laquelle ils doivent se diriger, en l'occurrence la sortie la plus proche. La flèche 25 permet d'installer la rampe d'éclairage dans le bon sens dans l'aéronef.

Comme précédemment expliqué, l'aéronef comprend de préférence, entre un point médian entre deux sorties et l'une desdites sorties, une pluralité de rampes d'éclairage selon l'invention, alignées les unes à la suite des autres. Selon la longueur des rampes, il peut être avantageux de prévoir des circuits de commande 3 adaptés pour commander l'activation et la désactivation de leurs diodes électroluminescentes 2 respectives de façon à simuler le déplacement d'un unique point sombre sur plusieurs rampes d'éclairage successives. A un instant donné, une rampe d'éclairage peut donc avoir toutes ses diodes électroluminescentes activées.

Lorsque le crash a lieu en mer et que le fuselage de l'aéronef est percé, l'eau de mer pénètre dans la cabine et finit par s'infiltrer entre le rail 18 et la rampe d'éclairage selon l'invention, dans le logement 20 dudit rail. Dans un premier temps, le circuit de commande 3 pilote les diodes électroluminescentes 2 comme précédemment expliqué. Au fur et à mesure que l'aéronef s'enfonce, la pression de l'eau présente dans ledit logement 20 augmente et exerce, sur les languettes escamotables 16 de la rampe d'éclairage, une force croissante essentiellement latérale. Cette force finit par provoquer la rétractation desdites languettes escamotables 16. Globalement moins dense que l'eau, la rampe a alors tendance à remonter vers la surface de l'eau et donc à se libérer du rail 18.

Lorsque la rampe d'éclairage est ainsi entourée d'eau, un courant induit s'établit entre ses borniers d'entrée 8 et de sortie 22. Le circuit de commande est adapté pour détecter ce courant induit, qui traduit une condition de libération de la rampe, et pour commander alors, de façon répétée, l'activation puis la désactivation de l'ensemble des diodes électroluminescentes 2 de la rampe d'éclairage.

Il peut être raisonnablement supposé qu'environ 30% des rampes d'éclairage de l'aéronef seront entraînées en dehors de l'aéronef et parviendront à la surface de l'eau.

Lorsqu'elle parvient à la surface de l'eau, la rampe d'éclairage selon l'invention se place naturellement dans une position correspondant à celle illustrée sur les figures annexées. En effet, sa plaque support 6, ses diodes électroluminescentes 2, ses moyens accumulateurs 4, son capot 1 et son bouchon 15 sont symétriques par rapport au plan transversal médian et au plan longitudinal vertical médian de ladite rampe d'éclairage. De plus, les moyens accumulateurs sont agencés en partie inférieure de la rampe. Celle-ci présente donc un barycentre relativement bas et centré selon les directions longitudinale et transversale, qui assure une certaine stabilité à la rampe d'éclairage lorsqu'elle flotte à la surface de l'eau. Cette stabilité est renforcée par les ailettes 10 du capot 1, qui s'appuient sur la surface de l'eau et agissent comme deux flotteurs.

Vues du ciel, les activations et désactivations répétées des diodes électroluminescentes 2 sont perçues comme des flashes qui permettent de repérer la rampe d'éclairage, et donc l'aéronef.

L'invention peut faire l'objet de nombreuses variantes par rapport au mode de réalisation illustré, dès lors que ces variantes entrent dans le cadre délimité par les revendications.

Par exemple, la rampe d'éclairage selon l'invention peut présenter une forme de barre allongée courbe ou en ligne brisée, les termes « direction longitudinale » employés précédemment désignant dans ce cas une direction courbe ou une ligne brisée suivant la forme de ladite barre.

Par ailleurs, les sources lumineuses selon l'invention peuvent être réalisées par des diodes électroluminescentes polychromatiques. Le circuit de commande est alors avantageusement adapté pour commander, en cas de crash, l'activation et la désactivation desdites diodes de façon à simuler le déplacement d'un point de couleur à la manière d'une chenille selon la direction longitudinale de la rampe et dans un sens de défilement donné, ledit point de couleur correspondant à une diode électroluminescente activée de façon à émettre dans une plage de longueurs d'ondes donnée -par exemple le rouge- tandis que toutes les autres diodes électroluminescentes sont activées de façon à émettre dans une autre plage de longueurs d'ondes -par exemple le vert-.

En outre, les moyens de fixation réversible ne sont pas limités à des moyens à languettes escamotables par déformation élastique. Les moyens de fixation réversible selon l'invention peuvent par exemple comprendre, en variante, des moyens à électroaimants, dont l'activation (ou, à l'inverse, la désactivation) provoquerait la fixation de la rampe d'éclairage à un rail de réception correspondant et dont la désactivation (respectivement l'activation) permettrait la libération de ladite rampe. Ces moyens à électroaimants pourraient être commandés par le circuit de commande de la rampe d'éclairage. Par exemple, le circuit de commande pourrait être adapté pour détecter au moins une condition représentative d'un crash en mer (par exemple, réception d'un signal correspondant déclenché par le personnel navigant) et pour commander la désactivation des moyens à électroaimants à l'issue d'une période prédéterminée suivant la détection de cette condition (période après laquelle il peut statistiquement être considéré que l'aéronef est immergé). Cette désactivation des moyens à électroaimants pourrait de surcroît constituer la condition représentative de la libération de la rampe utilisée par le circuit de commande pour déclencher un pilotage alternatif des sources lumineuses comme précédemment expliqué (signal lumineux clignotant permettant de repérer la rampe d'éclairage à la surface de l'eau). En variante, si la rampe d'éclairage est munie des borniers de continuité précédemment décrits, ce pilotage alternatif peut n'être déclenché que lorsqu'un courant induit entre les borniers est détecté par le circuit de commande.

## Revendications

1. Rampe d'éclairage de cabine d'aéronef comprenant :
- une pluralité de sources lumineuses (2) électriques,
- un circuit électronique de commande (3) comportant des moyens accumulateurs (4) aptes à alimenter électriquement lesdites sources lumineuses,
- des moyens (16) de fixation réversible pour une fixation réversible de la rampe d'éclairage,
**caractérisée en ce qu'**elle comprend une enveloppe (1, 15) étanche à l'eau qui enferme les sources lumineuses et le circuit de commande, et adaptée pour rendre la rampe d'éclairage apte à flotter à la surface de l'eau avec les sources lumineuses orientées vers le haut, **en ce que** les moyens (16) de fixation réversible permettent la fixation réversible de la rampe d'éclairage dans un rail de réception, et **en ce que** lesdits moyens de fixation réversibles sont aptes à libérer la rampe d'éclairage dudit rail.

2. Rampe d'éclairage selon la revendication 1, **caractérisée en ce que** les moyens de fixation réversible comprennent des languettes (16) escamotables par déformation élastique, destinées chacune à venir s'encastrer dans un logement (20) du rail et aptes à être escamotées sous l'effet de la pression de l'eau en cas d'immersion.

3. Rampe d'éclairage selon l'une des revendications 1 ou 2, **caractérisée en ce que** l'enveloppe comprend d'une part au moins un capot (1) supérieur présentant au moins une cavité (11) de réception des sources lumineuses et du circuit de commande, et d'autre part au moins un bouchon (15) inférieur, le(s)dit(s) bouchon(s) obturant de façon étanche à l'eau chaque cavité.

4. Rampe d'éclairage selon la revendication 3, **caractérisée en ce que** le bouchon (15) est formé par surmoulage des sources lumineuses (2), du circuit de commande (3) et du capot (1).

5. Rampe d'éclairage selon l'une des revendications 1 à 4, **caractérisée en ce que** le capot (1) présente deux ailettes latérales opposées (10).

6. Rampe d'éclairage selon l'une des revendications 1 à 5, **caractérisée en ce que** les moyens accumulateurs (4) sont agencés en partie inférieure de ladite rampe.

7. Rampe d'éclairage selon l'une des revendications 1 à 6, **caractérisée en ce que** les sources lumineuses (2) sont alignées selon une direction longitudinale de la rampe d'éclairage, et **en ce que** le circuit de commande (3) est adapté pour détecter au moins une condition représentative d'un crash et pour commander dans ce cas l'activation et la désactivation desdites sources lumineuses de façon à simuler le déplacement, à la manière d'une chenille, d'un point lumineux ou d'un point sombre ou d'un point de couleur selon ladite direction longitudinale et dans un sens donné dit sens de défilement.

8. Rampe d'éclairage selon l'une des revendications 1 à 7, **caractérisée en ce que** le circuit de commande (3) est adapté pour détecter au moins une condition représentative de la libération de la rampe d'éclairage suite à un crash en mer et pour commander dans ce cas, de façon répétée, l'activation puis la désactivation de l'ensemble des sources lumineuses (2).

9. Rampe d'éclairage selon la revendication 8, **caractérisée en ce que** le circuit de commande (3) est relié, à chacune des extrémités longitudinales de la rampe d'éclairage, à au moins un bornier de continuité (8, 22), et il est adapté pour détecter un courant induit entre les borniers (8, 22) des deux extrémités longitudinales de la rampe.

10. Aéronef **caractérisé en ce qu'**il comprend une cabine équipée d'une pluralité de rampes d'éclairage selon l'une des revendications 1 à 9.

## Claims

1. An aircraft cabin lighting strip comprising:
- a plurality of electric light sources (2),
- an electronic control circuit (3) comprising accumulator means (4) adapted to electrically power said light sources,
- reversible fastening means (16) for reversible fastening of the lighting strip,
**characterized in that** it comprises a water-tight envelope (1, 15) which encloses the light sources and the control circuit, and which is adapted to make the lighting strip capable of floating on the surface of the water with the light sources oriented upwards, **in that** the reversible fastening means (16) enable the reversible fastening of the lighting strip in a reception rail, and **in that** said reversible fastening means are adapted to release the lighting strip from said rail.

2. A lighting strip according to claim 1, **characterized in that** the reversible fastening means comprise tabs (16) which are retractable by elastic deformation, which tabs are each adapted to fit into a housing (20) of the rail and to be retracted under the effect of water pressure in case of immersion.

3. A lighting strip according to one of claims 1 or 2, **characterized in that** the envelope comprises at least one top cover (1) having at least one cavity (11) for receiving the light sources and the control circuit, and further comprises at least one bottom plug (15), said plug(s) obturating each cavity in a way that is water-tight.

4. A lighting strip according to claim 3, **characterized in that** the plug (15) is formed by molding over the light sources (2), the control circuit (3) and the cover (1).

5. A lighting strip according to one of claims 1 to 4, **characterized in that** the cover (1) has two opposite lateral fins (10).

6. A lighting strip according to one of claims 1 to 5, **characterized in that** the accumulator means (4) are arranged in the lower part of said strip.

7. A lighting strip according to one of claims 1 to 6, **characterized in that** the light sources (2) are aligned in a longitudinal orientation of the lighting strip, and **in that** the control circuit (3) is adapted to detect at least one condition representing a crash and **in that** case to command the activation and the deactivation of said light sources in such a way as to simulate the movement, in the manner of a caterpillar, of a point of light or of a dark point or of a point of colour along said longitudinal orientation and in a given direction referred to as direction of scrolling.

8. A lighting strip according to one of claims 1 to 7, **characterized in that** the control circuit (3) is adapted to detect at least one condition representing the release of the lighting strip further to a sea crash and **in that** case to repeatedly command the activation then the deactivation of all said light sources (2).

9. A lighting strip according to claim 8, **characterized in that** the control circuit (3) is linked, at each of the longitudinal ends of the lighting strip, to at least one continuity terminal block (8, 22), and is adapted to detect a current induced between the terminal blocks (8, 22) of the two longitudinal ends of the strip.

10. A aircraft **characterized in that** it comprises a cabin equipped with a plurality of lighting strips according to one of claims 1 to 9.

## Patentansprüche

1. Leuchtstreifen einer Luftfahrzeugkabine, umfassend:
- eine Vielzahl von elektrischen Lichtquellen (2),
- einen elektronischen Steuerkreis (3), der Speichermittel (4) umfasst, die geeignet sind, die Lichtquellen elektrisch zu versorgen,
- Mittel (16) zum reversiblen Befestigen für eine reversible Befestigung des Leuchtstreifens,
**dadurch gekennzeichnet, dass** er eine wasserdichte Hülle (1, 15) umfasst, welche die Lichtquellen und den Steuerkreis umschließt und geeignet ist, den Leuchtstreifen zu befähigen, mit den nach oben gerichteten Lichtquellen auf der Wasseroberfläche zu treiben, dass die Mittel (16) zum reversiblen Befestigen die reversible Befestigung des Leuchtstreifens in einer Aufnahmeschiene ermöglichen und dass die Mittel zum reversiblen Befestigen geeignet sind, den Leuchtstreifen von der Schiene freizugeben.

2. Leuchtstreifen nach Anspruch 1, **dadurch gekennzeichnet, dass** die Mittel zum reversiblen Befestigen durch elastische Verformung einziehbare Laschen (16) umfassen, die jeweils dazu bestimmt sind, sich in eine Aufnahme (20) der Schiene einzufügen, und geeignet sind, unter der Wirkung des Wasserdrucks im Fall eines Eintauchens eingezogen zu werden.

3. Leuchtstreifen nach einem der Ansprüche 1 oder 2, **dadurch gekennzeichnet, dass** die Hülle einerseits wenigstens eine obere Abdeckung (1), die wenigstens einen Hohlraum (11) zur Aufnahme der Lichtquellen und des Steuerkreises aufweist, sowie andererseits wenigstens einen unteren Verschluss (15) umfasst, wobei der Verschluss (die Verschlüsse) jeden Hohlraum wasserdicht verschließt (verschließen).

4. Leuchtstreifen nach Anspruch 3, **dadurch gekennzeichnet, dass** der Verschluss (15) durch Umgießen der Lichtquellen (2), des Steuerkreises (3) und der Abdeckung (1) gebildet ist.

5. Leuchtstreifen nach einem der Ansprüche 1 bis 4, **dadurch gekennzeichnet, dass** die Abdeckung (1) zwei gegenüberliegende Seitenflügel (10) aufweist.

6. Leuchtstreifen nach einem der Ansprüche 1 bis 5 **dadurch gekennzeichnet, dass** die Speichermittel (4) im unteren Teil des Streifens angeordnet sind.

7. Leuchtstreifen nach einem der Ansprüche 1 bis 6, **dadurch gekennzeichnet, dass** die Lichtquellen (2) entlang einer Längsrichtung des Leuchtstreifens ausgerichtet sind und dass der Steuerkreis (3) geeignet ist, wenigstens eine für einen Aufprall repräsentative Situation zu erfassen und in diesem Fall die Aktivierung und die Deaktivierung der Lichtquellen so zu steuern, dass die raupenartige Bewegung eines Lichtpunktes oder eines dunklen Punktes oder eines Farbpunktes entlang der Längsrichtung und in einer vorgegebenen Richtung, sogenannten Laufrichtung, simuliert wird.

8. Leuchtstreifen nach einem der Ansprüche 1 bis 7, **dadurch gekennzeichnet, dass** der Steuerkreis (3) geeignet ist, wenigstens eine für das Freigeben des Leuchtstreifens infolge eines Aufpralls im Meer repräsentative Situation zu erfassen und in diesem Fall wiederholt die Aktivierung, anschließen die Deaktivierung aller Lichtquellen (2) zu steuern.

9. Leuchtstreifen nach Anspruch 8, **dadurch gekennzeichnet, dass** der Steuerkreis (3) an jedem der Längsenden des Leuchtstreifens mit wenigstens einer Stromdurchgangsklemme (8, 22) verbunden ist und geeignet ist, einen zwischen den Klemmen (8, 22) der beiden Längsenden des Streifens induzierten Strom zu erfassen.

10. Luftfahrzeug, **dadurch gekennzeichnet, dass** es eine Kabine umfasst, die mit einer Vielzahl von Leuchtstreifen nach einem der Ansprüche 1 bis 9 ausgestattet ist.
